# EUROPEAN PATENT APPLICATION

(11) **EP 1 939 463 A1**
(43) Date of publication of application: **02.07.2008**
(21) Application number: 06256625.2
(22) Date of filing: 29.12.2006
(51) Int. Cl.: F16B 23/00

(54) **Screw with recess in the head of the screw**

(71) Applicant: Fong Prean Industrial Co., Ltd., Kaohsiung Hsien (TW)
(72) Inventor: Lin, Teng-Hung, Kaohsiung Hsien Taiwan (TW)
(74) Representative: Brown, Kenneth Richard

(57) **Abstract**

A screw comprises a screw head (1); a recess (2) formed in the screw head (1); a plurality of blocks (3) protruded from a periphery wall (21) of the recess (2); each block (3) having at least two inclined walls (31,32); each of the inclined walls (31,32) having a slope identical to a slope of the wall (21). Each block (3) has two inclined walls; and the connection of the inclined walls (31,32) belonging to one block (3) is formed as an acute angle. Or each block has three inclined walls which are formed as a trapezoidal shape.

## Description

### FIELD OF THE INVENTION

The present invention relates to screws, and in particular to a screw with a recess in the head of the screw, wherein a recess in the head of the screw comprises a screw head; a recess formed in the screw head; a plurality of blocks protruded from a periphery wall of the recess; each block having at least two inclined walls; each of the inclined walls having a slope identical to a slope of the wall.

### BACKGROUND OF THE INVENTION

Generally, a screw has a head portion. The head portion has a recess. A driving tool is inserted into the recess for driving the screw. The recess may have different shapes for example cruciform shapes, straight trench shapes, rectangular shapes, hexagonal shapes, etc. The cruciform shapes and straight trenches are general used, but they are easily deformed.

In general, the recess has a polygonal shape and has a plurality of walls which suffer from forces from the driving tools. If the force is too great, the recess will deform or the driving tool will slide out.

The U. S. Patent No. 6,453,781 and USP2592,462 disclose screws with different recess designs for improving the defects in the prior art.

In USP6,453,781, a mortise hole is formed with a plurality of lugs. The slopes of the lugs are different from one to one, even they are different from the slope of the mortise hole.

In USP2592462, the recess has a block. The slope of the block is designed to have a preferred effect as a force is applied thereon. The slope of the block is different from that of the recess.

The two prior arts, U. S. Patent No. 6,453,781 and USP2592,462, have different slopes for suffering from forces of a driving tool. However the structure is complicated and unstable. Thereby the price is high and the yield ratio is low.

### SUMMARY OF THE INVENTION

Accordingly, the primary object of the present invention is to provide a screw with a recess in the head of the screw, wherein a driving tool can be inserted into the recess to drive the screw easily. Moreover the driving tool can be firmly secured to the recess so that the operation is easily, inconveniently and effectively.

To achieve above objects, the present invention provides a screw with a recess in the head of the screw which comprises a screw head; a recess formed in the screw head; a plurality of blocks protruded from a periphery wall of the recess; each block having at least two inclined walls; each of the inclined walls having a slope identical to a slope of the wall. Each block has two inclined walls; and the connection of the inclined walls belonging to one block is formed as an acute angle. Or each block has three inclined walls which are formed as a trapezoidal shape.

The various objects and advantages of the present invention will be more readily understood from the following detailed description when read in conjunction with the appended drawing.

### BRIEF DESCRIPTION OF THE DRAWINGS

Fig. 1 shows the first embodiment of the present invention.
Fig. 2 is the cross sectional view of Fig. 1.
Fig. 3 shows the second embodiment of the present invention.
Fig. 4 is the schematic view of Fig. 3.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

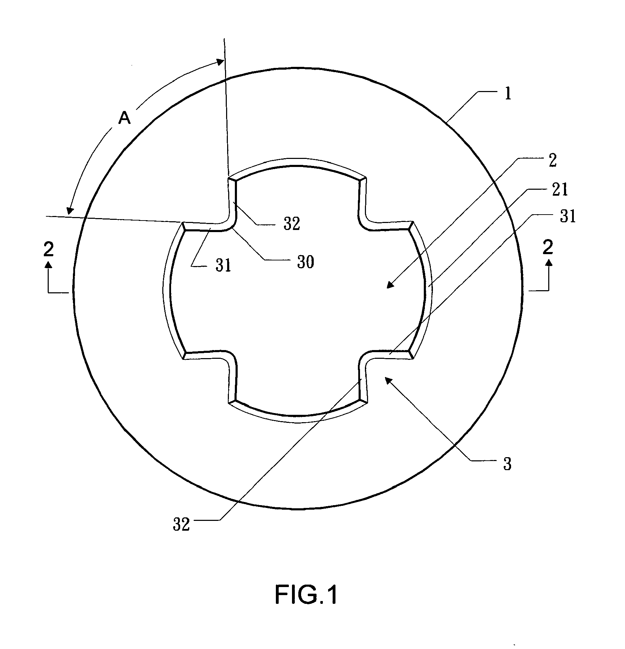

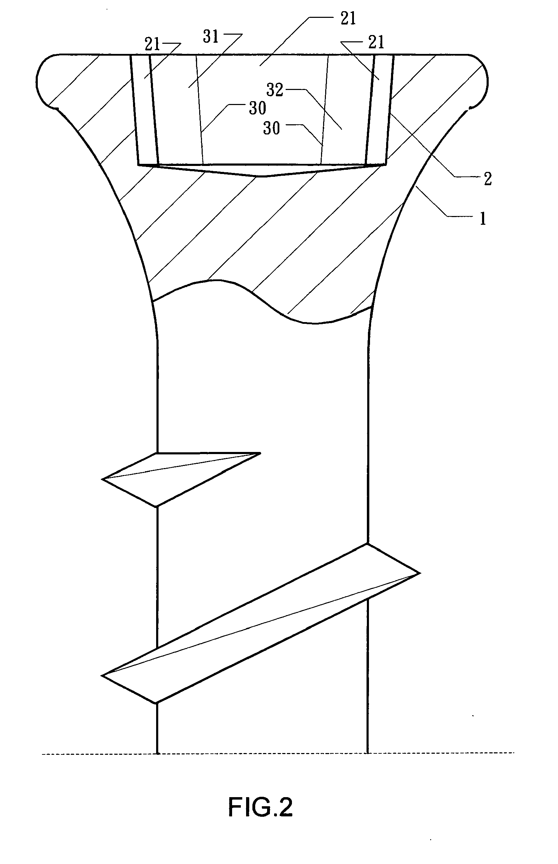

Referring to Figs. 1 to 2, the first structure of the structure of the present invention is illustrated. The structure has the following elements.

A screw has a screw head 1.

A recess 2 is formed in the screw head 1.

A plurality of blocks 3 are protruded from a periphery wall 21 of the recess 2. Each block 3 has two inclined walls 31, 32. Each of the inclined walls 31, 32 has a slope identical to a slope of the wall 21. The connection of the inclined walls 31, 32 belong to one block 3 is formed as an acute angle A.

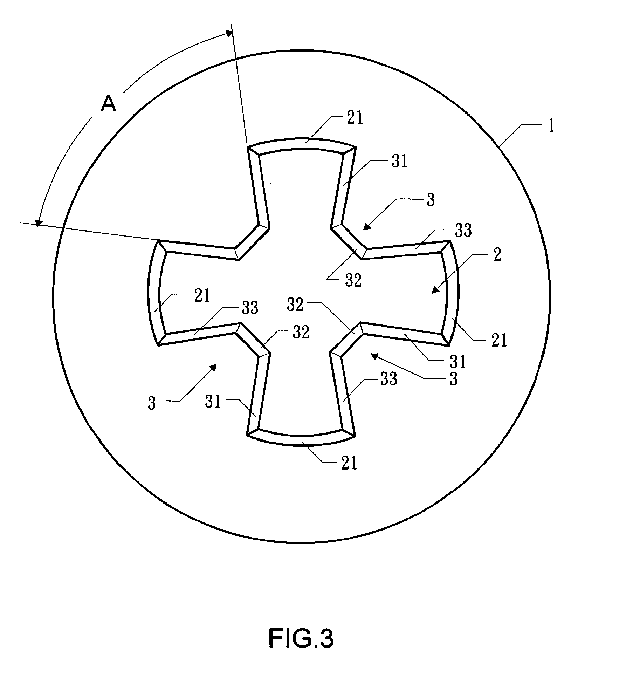

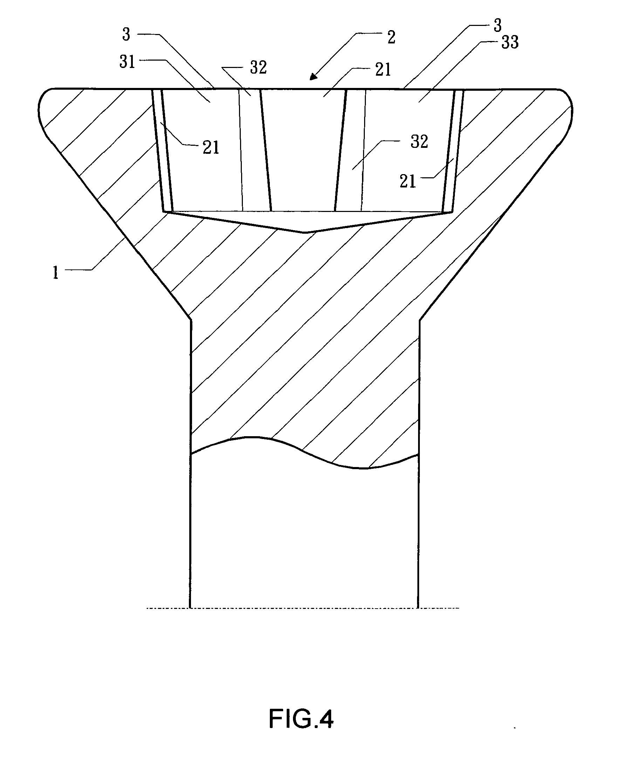

Referring to Figs. 3 and 4, the second embodiment of the present invention is illustrated.

A screw has a screw head 1.

A recess 2 is formed in the screw head 1.

A plurality of blocks 3 are protruded from a periphery wall 21 of the recess 2. Each block 3 has three inclined walls 31, 32 and 33. Each of the inclined walls 31, 32 has a slope identical to a slope of the wall 21. The three inclined walls 31, 32 and 33 are formed as a trapezoidal shape.

By above mentioned structure, a driving tool can be inserted into the recess 2 to drive the screw easily. Moreover the driving tool can be firmly secured to the recess 2 so that the operation is easily, inconveniently and effectively.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A screw with a recess in the head of the screw comprising:
a screw head;
a recess formed in the screw head;
a plurality of blocks protruded from a periphery wall of the recess; each block having at least two inclined walls; each of the inclined walls having a slope identical to a slope of the wall.

2. The screw as claimed in claim 1, wherein each block has two inclined walls; and the connection of the inclined walls belonging to one block is formed as an acute angle.

3. The screw as claimed in claim 1, wherein each block has three inclined walls which are formed as a trapezoidal shape.
